# EUROPÄISCHE PATENTSCHRIFT

(11) **EP 3 069 067 B1**
(45) Veröffentlichungstag und Bekanntmachung des Hinweises auf die Patenterteilung: **03.01.2018**
(21) Anmeldenummer: 15723235.6
(22) Anmeldetag: 20.05.2015
(51) Int. Cl.: F16L 55/035, F16L 3/10

(54) **VORRICHTUNG ZUR GERÄUSCHREDUZIERTEN BEFESTIGUNG VON ROHREN ODER SCHLÄUCHEN**
DEVICE FOR REDUCED-NOISE FASTENING OF PIPES OR HOSES
DISPOSITIF DE FIXATION RÉDUCTEUR DE BRUIT POUR TUBES OU FLEXIBLES

(30) Priorität: 20.05.2014 DE 202014102354 U
(43) Veröffentlichungstag der Anmeldung: 21.09.2016
(73) Patentinhaber: WALTER STAUFFENBERG GMBH & CO. KG, 58791 Werdohl (DE)
(72) Erfinder: KÖNIG, Ulrich Stefan, 58849 Herscheid (DE)
(74) Vertreter: Patentanwälte Dörner & Kötter PartG mbB
(86) Internationale Anmeldenummer: PCT/EP2015/061043
(87) Internationale Veröffentlichungsnummer: WO 2015/177181

(56) Entgegenhaltungen:
- EP-A1- 1 493 954
- EP-A1- 2 072 874
- EP-A2- 2 149 732
- DE-A1- 3 128 496
- US-A- 4 784 363
- US-A1- 2009 140 106
- US-A1- 2012 217 353

## Beschreibung

Die Erfindung betrifft eine Vorrichtung zur vibrations- und geräuschreduzierten Befestigung von Rohren oder Schläuchen nach dem Oberbegriff des Patentanspruchs 1. Eine solche Vorrichtung ist aus der DE 31 28 496 A bekannt. Zur Befestigung von Rohren und Schläuchen werden regelmäßig so genannte Schellen eingesetzt, die regelmäßig einen Schellenkörper umfassen, der aus einem thermoplastischen oder elastomeren Kunststoff oder auch aus Metall hergestellt ist. Der Schellenkörper ist dabei häufig aus zwei miteinander verbindbaren Befestigungsteilen gebildet, die in montiertem Zustand eine Durchführung zur Aufnahme des Rohres beziehungsweise des Schlauches bilden. Derartige Schellen sind in Deutschland gemäß DIN 3015 genormt. Zur Reduzierung von Vibrationen, die von dem aufgenommenen Rohr oder Schlauch auf den Schellenkörper übertragen werden, ist es bekannt, in der Durchführung des Schellenkörpers einen ringförmigen Gummieinsatz zur Aufnahme des Rohres beziehungsweise des Schlauches einzufügen. Zur axialen Fixierung des Gummieinsatzes ist dieser mit einem mittig umlaufend angeformten Steg versehen, der in eine mittig in der Durchführung der Schelle eingebrachte Nut eingreift.
Die vorbekannte Lösung hat sich in der Praxis bewährt. Dabei hat sich gezeigt, dass eine Vergrößerung der schall- und vibrationsreduzierenden Eigenschaften umso größer ist, je größer die Differenz zwischen Außendurchmesser und Innendurchmesser des Gummieinsatzes ist. Bei einem gegebenen Leitungsdurchmesser ist durch die gewählte Größe der umhüllenden Schellen die Differenz jedoch auf ein bestimmtes Maß begrenzt. Zwar können die schall- und vibrationsreduzierenden Eigenschaften durch eine Verringerung des Härtegrades des Materials des Einsatzes weiter erhöht werden, jedoch sind auch hier fertigungstechnische Grenzen vorhanden.
Hier will die Erfindung Abhilfe schaffen. Der Erfindung liegt die Aufgabe zu Grunde, eine Vorrichtung zur vibrations- und geräuschreduzierten Befestigung von Rohren oder Schläuchen bereitzustellen, bei der die schall- und vibrationsreduzierenden Eigenschaften verbessert sind. Gemäß der Erfindung wird diese Aufgabe durch die Merkmale des kennzeichnenden Teils des Patentanspruchs 1 gelöst.

Mit der Erfindung ist eine Vorrichtung zur vibrations- und geräuschreduzierten Befestigung von Rohren oder Schläuchen bereitgestellt, bei der die schall- und vibrationsreduzierenden Eigenschaften vergrößert sind. Dadurch, dass der Einsatz durch einen zylindrischen Grundkörper gebildet ist, auf dessen Außenmantelfläche beabstandet zueinander zwei umlaufende radial nach außen kragende Stege angeordnet sind, wobei in der Durchführung der Befestigungsteile ein radial umlaufender Mittelsteg angeordnet ist, der in eine zwischen den Stegen des Einsatzes ausgebildete Nut eingreift, ist eine größere Differenz zwischen Außendurchmesser und Innendurchmesser des Einsatzes ermöglicht, da der innen liegende Außenmantelbereich des Einsatzes einen kleineren Durchmesser aufweist, als der durch die nach außen kragenden Stege gebildete äußere Randbereich. Darüber hinaus ist durch diese Gestaltung der direkte Übertragungsweg von dem aufgenommenen Rohr beziehungsweise dem aufgenommenen Schlauch zu den metallischen Schrauben, über die die Verbindung der beiden Befestigungsteile miteinander erfolgt und die einen erheblichen Einfluss auf die Schallübertragung haben, deutlich vergrößert.

Unter dem Begriff "ringförmiger Einsatz" sind nachfolgend sowohl kreisringförmige als auch polygonförmige Einsätze zu subsumieren.

In Weiterbildung der Erfindung sind die beiden Stege jeweils endseitig an dem Grundkörper angeformt. Hierdurch ist der mittlere durchmesserreduzierte Bereich der Außenmantelfläche des Einsatzes maximiert.

In der Erfindung sind in wenigstens einem umlaufenden Steg, bevorzugt in beide umlaufenden Stege umlaufend beabstandet zueinander Aussparungen eingebracht, wodurch eine kammartige Form gebildet ist. Hierdurch ist die Anlagefläche der umlaufenden Stege an der durch die Befestigungsteile gebildeten Durchführung vermindert, wodurch die Schallübertragung reduziert ist. Dabei können die Aussparungen alle oder teilweise in den Grundkörper hineinragend fortgeführt sein, wodurch im Bereich dieser Aussparungen die Materialstärke des Grundkörpers reduziert ist.

In weiterer Ausgestaltung der Erfindung ist der Innendurchmesser des Mittelsteges der Befestigungsteile kleiner, als der Durchmesser der Außenmantelfläche des Grundkörpers, wobei die nach außen kragenden Stege des Einsatzes an der Durchführung beidseitig des Mittelsteges anliegen. Hierdurch liegt der zwischen den nach außen kragenden Stegen befindliche Innenbereich der Außenmantelfläche des Einsatzes nicht an dem Mittelsteg der Durchführung an, weshalb in diesem Bereich keine Vibrations- oder Schallübertragung stattfindet. Die schall- und vibrationsreduzierenden Eigenschaften sind hierdurch weiter verbessert.

In der Erfindung sind auf der Innenmantelfläche des Einsatzes dem Verlauf der auf der Außenmantelfläche angeordneten radial nach außen kragenden Stege folgend je Steg wenigstens drei beabstandet zueinander angeordnete Stützkörper angeordnet. Hierdurch ist eine lediglich bereichsweise Kontaktierung des Einsatzes mit dem aufgenommenen Rohr beziehungsweise Schlauch erzielt, wodurch die Schallübertragung weiter vermindert ist. Je nach Einsatzfall sind dabei durch entsprechende Ausgestaltung der Stützkörper kürzere oder auch längere Rohrkontaktflächen erzielbar.

In der Erfindung sind die Stützkörper jeweils im Bereich einer in den gegenüberliegenden, auf der Außenmantelfläche angeordneten Steg eingebrachten Ausnehmung angeordnet. Hierdurch ist eine direkte Körperschallübertragung vermieden. Der Körperschall wird quasi "um die Ecke" gelenkt.

In Weiterbildung der Erfindung ist der Einsatz mehrteilig, insbesondere zweiteilig ausgebildet. Hierdurch ist eine vereinfachte Montage des Einsatzes bewirkt.

In Ausgestaltung der Erfindung ist der Einsatz aus zwei bevorzugt identischen Hälften gebildet, wobei jeweils in dem Querschnitt eines nach außen kragenden Steges auf einer Seite eine Bohrung und auf der gegenüberliegenden Seite ein Stift angeordnet ist, sodass jede Hälfte zwei diagonal zueinander angeordnete Stifte und zwei diagonal zueinander angeordnete Bohrungen aufweist, derart, dass eine Steckverbindung der beiden Hälften ermöglicht ist. Hierdurch ist eine zuverlässige Fixierung der beiden Hälften erzielt.

Vorzugsweise sind die wenigstens zwei Teile des Einsatzes über ein Filmscharnier miteinander verbunden. Hierdurch sind die sich ergänzenden Teile verliersicher miteinander verbunden.

In Weiterbildung der Erfindung ist der Einsatz aus einem Elastomer hergestellt. Gute Ergebnisse wurden auch bei Verwendung eines thermoplastischen Kautschuks erzielt. Die wesentlichen Eigenschaften dieses Materials liegen deutlich über denen vergleichbarer vulkanisierter Gummierzeugnisse.

In weiterer Ausgestaltung der Erfindung sind die beiden Befestigungsteile zumindest an ihren zueinander zugewandten Seiten, bevorzugt jedoch insgesamt identisch ausgebildet. Hierdurch ist der Fertigungsaufwand vermindert. Bei identischer Ausgestaltung der Befestigungsteile sind zudem Lageraufwände minimiert.

In weiterer Ausgestaltung der Erfindung sind die Befestigungsteile im Wesentlichen aus Kunststoff ausgebildet. Hierdurch ist eine kostengünstige Fertigung langlebiger und korrosionsresistenter Befestigungsteile ermöglicht. Alternativ können die Befestigungsteile auch aus Metall, insbesondere Aluminium, Stahl oder Edelstahl hergestellt sein.

In Ausgestaltung der Erfindung sind die Befestigungsteile über ein Filmscharnier miteinander verbunden. Hierdurch sind die jeweils zueinander gehörenden Befestigungsteile verliersicher miteinander verbunden.

Andere Weiterbildungen und Ausgestaltungen der Erfindung sind in den übrigen Unteransprüchen angegeben. Ein Ausführungsbeispiel ist in der Zeichnung dargestellt und wird nachfolgend im Einzelnen beschrieben. Es zeigen:

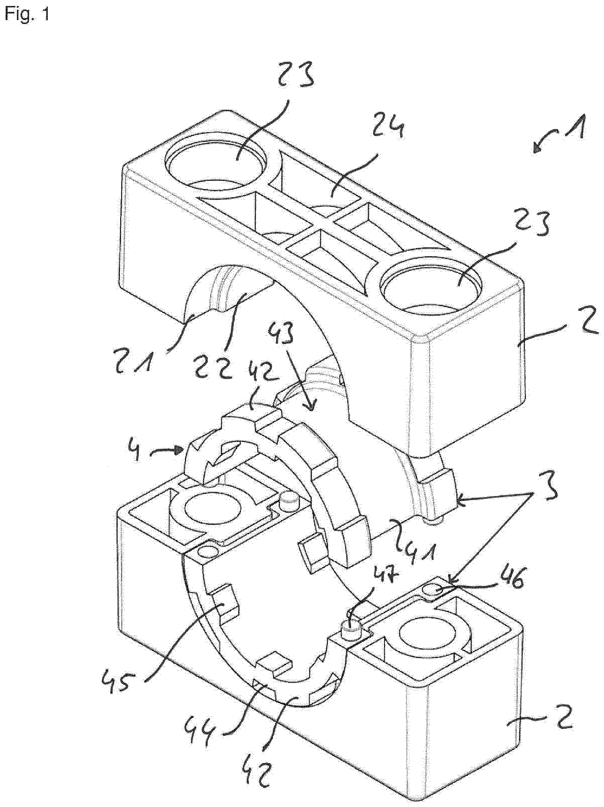

- Figur 1: die schematische Darstellung einer Vorrichtung zur geräuschreduzierten Befestigung von Rohren oder Schläuchen in räumlicher Explosionsdarstellung und
- Figur 2: die Darstellung einer Einsatzhälfte eines Einsatzes einer weiteren Ausführungsform.

Die als Ausführungsbeispiel gewählte Vorrichtung zur geräuschreduzierten Befestigung von Rohren oder Schläuchen ist als blockförmige Rohrschelle 1 ausgebildet, welche aus zwei identisch gestalteten Rohrschellenhälften 2 zusammengesetzt ist und die einen Einsatz 3 aufnimmt, der aus zwei Einsatzhälften 4 zusammengesetzt ist.

Die Rohrschellenhälften 2 sind im Ausführungsbeispiel aus Polypropylen (PP) hergestellt und weisen einen im Wesentlichen quaderförmig ausgebildeten Grundkörper auf, in den mittig in Querrichtung eine halbkreisförmige Ausnehmung 21 eingeformt ist. Mittig der halbkreisförmigen Ausnehmung 21 ist radial umlaufend ein Mittelsteg 22 angeformt, dessen Breite in etwa der Hälfte der Breite der Rohrschellenhälfte 2 entspricht.

In die Schellenhälften 2 sind zu beiden Seiten der Ausnehmung 21 gegenüberliegend zwei Bohrungen 23 eingebracht. Die Bohrungen 23 dienen der Durchführung von Schrauben zur Verspannung der beiden Rohrschellenhälften 2 gegen ein zwischen den Ausnehmungen 21 von dem Einsatz 3 aufgenommenes - nicht dargestelltes - Rohr. Weiterhin sind zwischen den Bohrungen 23 Aussparungen 24 eingebracht. Diese Aussparungen 24 dienen der Materialersparnis sowie der Gewichtsreduktion der Rohrschellenhälften 2.

Der Einsatz 3 ist im Ausführungsbeispiel aus einem thermoplastischen Elastomer hergestellt und ist aus zwei Einsatzhälften 4 zusammengesetzt, die identisch ausgebildet sind. Die Einsatzhälften 4 bestehen jeweils aus einem hälftigen hohlzylindrischen Grundkörper 41, auf dessen Außenmantelfläche gegenüberliegend randseitig zwei umlaufende radial nach außen kragende Stege 42 angeformt sind, sodass zwischen den Stegen 42 eine Nut 43 ausgebildet ist. In die umlaufenden Stege 42 sind in regelmäßigen Abständen zueinander Aussparungen 44 eingebracht, wodurch eine kammartige Form der umlaufenden Stege 42 gebildet ist. Auf der Innenmantelfläche der Einsatzhälften 4 sind dem Verlauf der auf der Außenmantelfläche angeordneten radial nach außen kragenden Stege 42 folgend jeweils drei beabstandet zueinander angeordnete Stützkörper 45 angeformt. Dabei sind die Stützkörper 45 jeweils in Höhe einer in dem gegenüberliegenden, auf der Außenmantelfläche angeordneten Steg 42 eingebrachten Aussparung 44 angeordnet. Im Ausführungsbeispiel entspricht die axiale Breite der Stützkörper 45 der axialen Breite der umlaufenden Stege 42. Insgesamt weist der durch die beiden Einsatzhälften 4 gebildete Einsatz 3 somit auf beiden Außenseiten des Innenmantels des Einsatzes 3 sechs beabstandet zueinander angeformte Stützkörper 45 auf.

Zur formschlüssigen Verbindung der beiden Einsatzhälften 4 sind in den Querschnitt der beiden identisch ausgebildeten Einsatzhälften 4 jeweils im Bereich des nach außen kragenden Steges 42 auf einer Seite eine Bohrung 46 und auf der gegenüberliegenden Seite ein Stift 47 angeordnet, sodass jede der Einsatzhälften 4 zwei diagonal zueinander angeordnete Stifte 47 und zwei diagonal zueinander angeordnete Bohrungen 46 aufweist. In montiertem Zustand des Einsatzes 3 greifen die Stifte 47 einer Einsatzhälfte 4 jeweils in eine Bohrung 46 der gegenüberliegend angeordneten Einsatzhälfte 4 ein.

Der Einsatz 3 ist derart in die durch die Ausnehmungen 21 der Rohrschellenhälften 2 gebildete Durchführung eingesetzt, dass die beiden umlaufenden Stege 42 beidseitig des Mittelsteges 22 der Rohrschellenhälften 2 an den Ausnehmungen 21 anliegen. Dabei ist der Innendurchmesser des Mittelsteges 22 der durch die Rohrschellenhälften 2 gebildeten Rohrschelle 1 kleiner gewählt, als der Durchmesser der Außenmantelfläche des Grundkörpers 41 des durch die Einsatzhälften 4 gebildeten Einsatzes 3. Der Einsatz 3 liegt somit lediglich mit den Stegen 42, deren Anlagefläche durch die Aussparungen 44 reduziert ist, an der Rohrschelle 1 an. Die Kontaktfläche des Einsatzes 3 mit dem aufzunehmenden - nicht dargestellten - Rohr ist durch die Einzelflächen der auf der Innenmantelfläche des Grundkörpers 41 angeordneten Stützkörper 45 gebildet. Je nach Einsatzfeld können die Stützkörper 45 unterschiedlich ausgebildet sein. So können beispielsweise Übergangsradien vorgesehen sein, wodurch eine besondere Eignung zur Schlauchbefestigung gegeben ist.

Die spezielle Geometrie des Einsatzes 3 ermöglicht die Steuerung der Elastizität neben dem Härtegrad des verwendeten Materials hinaus auch durch die Formgebung. Dabei ist der Einsatz 3 durch die beiden umlaufenden Stege 42 in den Rohrschellenhälften 2 geführt, wodurch der Übertragungsweg auftretender Schwingungen deutlich vergrößert ist.

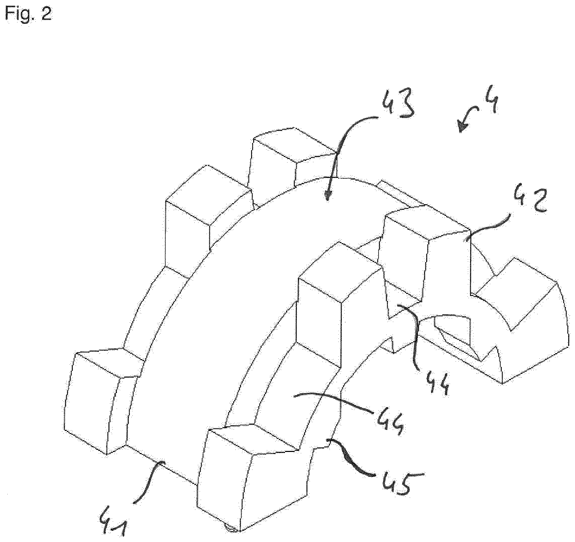

Im Ausführungsbeispiel gemäß Figur 2 sind die in die umlaufenden Stege 42 eingebrachten Aussparungen in den Grundkörper 41 hineinragend fortgeführt, wodurch im Bereich dieser Aussparungen 44 die Materialstärke des Grundkörpers 41 reduziert ist. Hierdurch ist die Elastizität der im Bereich der Aussparungen auf der Innenmantelfläche des Grundkörpers 41 angeordneten Stützkörper 45 vergrößert.

## Patentansprüche

1. Vorrichtung zur geräuschreduzierten Befestigung von Rohren oder Schläuchen, umfassend zwei miteinander verbindbare Befestigungsteile mit Ausnehmungen, welche im montierten Zustand eine Durchführung bilden, in der ein vibrationsdämpfender ringförmiger Einsatz angeordnet ist, dessen Innenkontur zur Aufnahme eines Rohres oder Schlauches ausgebildet ist, wobei der Einsatz (3) durch einen hohlzylindrischen Grundkörper (41) gebildet ist, auf dessen Außenmantelfläche beabstandet zueinander zwei umlaufende radial nach außen kragende Stege (42) angeordnet sind, wobei in der Durchführung der Befestigungsteile (2) ein radial umlaufender Mittelsteg (22) angeordnet ist, der in eine zwischen den Stegen (42) des Einsatzes (3) ausgebildete Nut (43) eingreift, **dadurch gekennzeichnet, dass** in den beiden umlaufenden Stegen (42) umlaufend beabstandet zueinander Aussparungen (44) eingebracht sind, wodurch eine kammartige Form gebildet ist, wobei auf der Innenmantelfläche des Einsatzes (3) dem Verlauf der auf der Außenmantelfläche angeordneten radial nach außen kragenden Stege (42) folgend je Steg (42) wenigstens drei beabstandet zueinander angeordnete Stützkörper (45) angeordnet sind und wobei die Stützkörper (45) jeweils im Bereich einer in dem gegenüberliegenden, auf der Außenmantelfläche angeordneten Steg (42) eingebrachten Aussparung (44) angeordnet sind.

2. Vorrichtung nach Anspruch 1, **dadurch gekennzeichnet, dass** die beiden Stege (42) jeweils endseitig an dem Grundkörper (41) angeformt sind.

3. Vorrichtung nach einem der vorgenannten Ansprüche, **dadurch gekennzeichnet, dass** die Aussparungen (44) zumindest teilweise in den Grundkörper (41) hineinragend fortgeführt sind, wodurch im Bereich dieser Aussparungen (44) die Materialstärke des Grundkörpers (41) reduziert ist.

4. Vorrichtung nach einem der vorgenannten Ansprüche, **dadurch gekennzeichnet, dass** der Innendurchmesser des Mittelsteges (22) der Befestigungsteile (2) kleiner ist, als der Durchmesser der Außenmantelfläche des Grundkörpers (41), wobei die nach außen kragenden Stege (42) des Einsatzes (3) an der Durchführung beidseitig des Mittelsteges (22) anliegen.

5. Vorrichtung nach einem der vorgenannten Ansprüche, **dadurch gekennzeichnet, dass** der Einsatz (3) mehrteilig, insbesondere zweiteilig ausgebildet ist.

6. Vorrichtung nach Anspruch 5, **dadurch gekennzeichnet, dass** der Einsatz (3) aus zwei bevorzugt identischen Hälften (4) gebildet ist, wobei jeweils in dem Querschnitt eines nach außen kragenden Steges (42) auf einer Seite eine Bohrung (46) und auf der gegenüberliegenden Seite ein Stift (47) angeordnet ist, sodass jede Hälfte zwei diagonal zueinander angeordnete Stifte (47) und zwei diagonal zueinander angeordnete Bohrungen (46) aufweist, derart, dass eine Steckverbindung der beiden Hälften (4) ermöglicht ist.

7. Vorrichtung nach Anspruch 5 oder 6, **dadurch gekennzeichnet, dass** die wenigstens zwei Teile des Einsatzes (3) über ein Filmscharnier miteinander verbunden sind.

8. Vorrichtung nach einem der vorgenannten Ansprüche, **dadurch gekennzeichnet, dass** der Einsatz (3) aus einem thermoplastischen Elastomer hergestellt ist.

9. Vorrichtung nach einem der vorgenannten Ansprüche, **dadurch gekennzeichnet, dass** die beiden Befestigungsteile (2) zumindest an ihren zueinander zugewandten Seiten, bevorzugt insgesamt identisch ausgebildet sind.

10. Vorrichtung nach einem der vorgenannten Ansprüche, **dadurch gekennzeichnet, dass** die Befestigungsteile (2) im Wesentlichen aus Kunststoff ausgebildet sind.

11. Vorrichtung nach einem der vorgenannten Ansprüche, **dadurch gekennzeichnet, dass** die Befestigungsteile (2) über ein Filmscharnier miteinander verbunden sind.

## Claims

1. Device for reduced-noise fastening of pipes or hoses, comprising two fastening elements with recesses which can be connected to one another, which, when assembled, form a duct in which a vibration-suppressing ring-shaped insert is arranged, whose inner contour is formed to hold a pipe or hose, where the insert (3) is formed by a hollow-cylindrical main body (41) on the outer surface of whose casing two radially circumferential outwardly extending webs (42) are arranged at a distance from one another, where a radially circumferential central web (22) is arranged in the duct of the fastening elements (2) which engages a groove (43) formed between the webs (42) of the insert (3), **characterised in that** circumferential recesses (44) are made at a distance to one another in the two circumferential webs (42), thereby forming a comb-like shape, where for each web (42) at least three supporting bodies (45) are arranged at a distance from one another on the inner surface of the casing of the insert (3), which follow the course of the radially outwardly extending webs (42) arranged on the surface of the outer casing and where each of the supporting bodies (45) is arranged in the area of a recess (44) formed in the opposite web (42) arranged in the outer surface of the casing.

2. Device according to claim 1, **characterised in that** each of the two webs (42) is formed on the end side of the main body (41).

3. Device according to any one of the foregoing claims, **characterised in that** the recesses (44) are continued to project at least partially into the main body (41), thereby reducing the material thickness of the main body (41) in the area of these recesses (44).

4. Device according to any one of foregoing claims, **characterised in that** the inner diameter of the central web (22) of the fastening elements (2) is smaller than the diameter of the outer surface of the casing of the main body (41), where the outwardly extending webs (42) of the insert (3) lie against the duct on either side of the central web (22).

5. Device according to any one of foregoing claims, **characterised in that** the insert (3) is formed in several parts, preferably in two parts.

6. Device according to claim 5, **characterised in that** the insert (3) is formed of two preferably identical halves (4) where, in the cross section of each outwardly extending web (42), a bore (46) is arranged on one side and a pin (47) on the other side, so that each half has two pins (47) arranged diagonally to one another and two bores (46) arranged diagonally to one another, in such a way that it is possible to connect the two halves (4) by plugging them into one another.

7. Device according to claim 5 or claim 6, **characterised in that** the at least two parts of the insert (3) are joined to one another by a film hinge.

8. Device according to any one of foregoing claims, **characterised in that** the insert (3) is made of a thermoplastic elastomer.

9. Device according to any one of the foregoing claims, **characterised in that** the two fastening elements (2) are preferably substantially identical in form on the sides facing one another.

10. Device in accordance with any one of the foregoing claims, **characterised in that** the fastening elements (2) are manufactured essentially from plastic.

11. Device in accordance with any of the foregoing claims, **characterised in that** the fastening elements (2) are joined to one another by a film hinge.

## Revendications

1. Dispositif de fixation réducteur de bruit pour tubes ou flexibles, comprenant deux pièces de fixation reliables entre elles et comprenant des évidements qui, à l'état monté, forment un passage dans lequel est disposé un insert de forme annulaire amortissant les vibrations, insert dont le contour intérieur est configuré pour recevoir un tube ou un flexible, sachant que l'insert (3) est formé par un corps de base (41) cylindrique creux sur la surface enveloppante extérieure duquel sont disposées deux nervures (42) distantes l'une de l'autre et faisant saillie en périphérie radialement vers l'extérieur, sachant que dans le passage des pièces de fixation (2) est disposée une nervure médiane (22) au tracé périphérique radial qui pénètre dans une rainure (43) formée entre les nervures (42) de l'insert (3), **caractérisé en ce que** dans les deux nervures (42) périphériques ont été ménagés des évidements (44) périphériques distants les uns des autres, ce qui crée une géométrie en forme de peigne, sachant que sur la surface enveloppante intérieure de l'insert (3) sont disposés, par nervure (42), en suivant le tracé des nervures (42) saillantes radialement vers l'extérieur disposées sur la surface enveloppante extérieure, au moins trois corps d'appui (45) distants les uns des autres, et sachant que les corps d'appui (45) sont disposés chacun dans la zone d'un évidement (44) ménagé dans la nervure (42) située en face et disposée sur la surface enveloppante extérieure.

2. Dispositif selon la revendication 1, **caractérisé en ce que** les deux nervures (42) sont modelées chacune à leur extrémité contre le corps de base (41).

3. Dispositif selon l'une des revendications précédentes, **caractérisé en ce que** les évidements (44) se poursuivent au moins en partie pour faire saillie dans le corps de base (41), faisant que dans la zone de ces évidements (44) l'épaisseur du matériau du corps de base (41) est réduite.

4. Dispositif selon l'une des revendications précédentes, **caractérisé en ce que** le diamètre intérieur de la nervure médiane (22) des pièces de fixation (2) est inférieur au diamètre de la surface enveloppante extérieure du corps de base (41), sachant que les nervures (42) de l'insert (3), qui font saillie vers l'extérieur, appliquent contre le passage des deux côtés de la nervure médiane (22).

5. Dispositif selon l'une des revendications précédentes, **caractérisé en ce que** l'insert (3) est en plusieurs parties, notamment en deux parties.

6. Dispositif selon la revendication 5, **caractérisé en ce que** l'insert (3) est formé de deux moitiés (4) de préférence identiques, sachant que respectivement dans la section d'une nervure (42) faisant saillie vers l'extérieur est disposé sur un côté un alésage (46) et sur le côté d'en face une tige (47), de sorte que chaque moitié présente deux tiges (47) agencées réciproquement en diagonale et deux alésages (46) agencés réciproquement en diagonale, de sorte à permettre une jonction par enfichage des deux moitiés (4).

7. Dispositif selon la revendication 5 ou la revendication 6, **caractérisé en ce qu'**au moins deux pièces de l'insert (3) sont reliées entre elles par un film formant charnière.

8. Dispositif selon l'une des revendications précédentes, **caractérisé en ce que** l'insert (3) est fabriqué en élastomère thermoplastique.

9. Dispositif selon l'une des revendications précédentes, **caractérisé en ce que** les deux pièces de fixation (2) sont configurées, au moins sur leurs côtés se faisant face, de préférence identiques dans l'ensemble.

10. Dispositif selon l'une des revendications précédentes, **caractérisé en ce que** les pièces de fixation (2) sont fabriquées essentiellement en matière plastique.

11. Dispositif selon l'une des revendications précédentes, **caractérisé en ce que** les pièces de fixation (2) sont reliées entre elles par un film formant charnière.
